# EUROPÄISCHE PATENTANMELDUNG

(11) **EP 1 418 706 A1**
(43) Veröffentlichungstag der Anmeldung: **12.05.2004**
(21) Anmeldenummer: 03024559.1
(22) Anmeldetag: 27.10.2003
(51) Int. Cl.: H04L 12/24, H04L 29/06

(54) **Verfahren zur Fernkonfiguration**

(30) Priorität: 08.11.2002 DE 10252109
(71) Anmelder: SIEMENS AKTIENGESELLSCHAFT, 80333 München (DE)
(72) Erfinder: Eckardt, Dieter, Dr., 91074 Herzogenaurach (DE); Rebbereh, Carsten, Dr., 91301 Kersbach (DE)

(57) **Zusammenfassung**

Die Erfindung bezieht sich auf ein Verfahren zur Parametrierung einer Einrichtung (2,4) mittels einer Dateneingabevorrichtung (6), die mittels einer Datenverbindung (8,10) mit der Einrichtung (2,4) verknüpft ist. Erfindungsgemäß wird ein eingegebener Datensatz eines Parameters übermittelt, wird dieser Datensatz beim Empfang quittiert, wird die Identität des quittierten Datensatzes anhand des eingegebenen Datensatzes überprüft und wird der empfangene Datensatz nach erfolgter Identitätsbestätigung freigegeben. Somit erhält man ein Parametrierverfahren mit dem Parameter, insbesondere sicherheitsrelevante Parameter, unverändert, insbesondere an einem vorgesehenen Speicherplatz, eingelesen werden.

## Beschreibung

### Verfahren zur Parametrierung

Die Erfindung bezieht sich auf ein Verfahren zur Parametrierung einer Einrichtung mittels einer Dateneingabevorrichtung, die mittels einer Datenverbindung mit der Einrichtung verknüpft ist.

Im Handel sind Parametrier- und Inbetriebnahmetools erhältlich, mit denen man mit Hilfe einer Dateneingabevorrichtung, beispielsweise einem PC, insbesondere einem tragbaren PC, oder einem Programmiergerät (PG), Einrichtungen, beispielsweise Steuerungen oder Antriebssysteme, parametrieren kann. Bei dem Verfahren zur Parametrierung müssen eine Unmenge von Parametern, die zumindest eine Parameternummer und einen Parameterwert aufweisen, in die zu parametrierende Einrichtung eingegeben werden. Um die Parametrierung möglichst komfortabel zu machen, weisen die im Handel erhältlichen Parametrierund Inbetriebnahmetools jeweils eine PC-Benutzeroberfläche auf. Mittels dieser Benutzeroberfläche wird eine erste Inbetriebnahme bzw. eine funktionsorientierte Parametrierung sehr einfach, da der Benutzer sich nur durch die einzelnen Parametermasken durchklicken muss.

Als Datenverbindung zwischen dem PC bzw. PG und der zu parametrierenden Einrichtung ist entweder eine Zweipunktverbindung (serielle oder parallele Datenübertragung) oder ein Feldbus vorgesehen. Mittels der Zweipunktverbindung ist eine Einrichtung, beispielsweise ein Umrichter eines Antriebssystems, mit dem PC/PG datentechnisch verbunden. Nach der Parametrierung wird die Datenverbindung vom Umrichter entfernt und mit einem weiteren Umrichter eines Antriebssystems verbunden. Mit der Verwendung eines Feldbusses können mehrere am Feldbus angeschlossene Umrichter eines Antriebssystems nacheinander parametriert werden, ohne dass eine datentechnische Verbindung jeweils hardwaremäßig aufgebaut werden muss.

Bei der Parametrierung mit einem PC/PG ist dieser Vorgang kritisch, da erstens der PC/PG keine sichere Plattform darstellt und zweitens die Übertragungsstrecke zur Einrichtung potentiell fehlerbehaftet ist. Bei der Parametrierung wird angenommen, dass die Datensätze einzelner Parameter bei der zu parametrierenden Einrichtung richtig angekommen sind. Eine derartige Annahme kann bei Parametrierung sicherheitsrelevanter Funktionen im Fehlerfall zu erheblichen Sachschäden führen bzw. Personen schädigen. Zur Parametrierung zählt auch die Änderung von bereits abgelegten Parametern.

Der Erfindung liegt nun die Aufgabe zugrunde, ein Verfahren zur Parametrierung einer Einrichtung anzugeben, bei dem der genannte Nachteil nicht mehr auftritt.

Diese Aufgabe wird erfindungsgemäß mit dem Merkmal des Anspruchs 1 gelöst.

Dadurch, dass jeder Datensatz eines in der zu parametrierenden Einrichtung empfangenen Parameter quittiert und anschließend mit dem Datensatz des gesendeten Parameters auf Identität geprüft wird, erhält man die Möglichkeit zu prüfen, ob der in der Dateneingabeeinrichtung eingegebene Datensatz eines Parameters auch tatsächlich ohne Fehler in der zu parametrierenden Einrichtung angekommen ist. Erst nach der Bestätigung der Identität wird der in der Einrichtung empfangene Parameter freigegeben. Da mit diesem erfindungsgemäßen Verfahren jeweils ein Datensatz eines empfangenen Parameters quittiert wird, erhält man eine Kontrollmöglichkeit über die Datenverbindung. Falls eine Identität nicht bestätigt werden kann, so muss sich der Datensatz eines übermittelten Parameters auf der Datenverbindung verändert haben, so dass eine Freigabe des empfangenen Datensatzes für die Einrichtung nicht erteilt werden kann.

Innerhalb der zu parametrierenden Einrichtung wird jeder Datensatz eines empfangenen Parameters derart weiterverarbeitet bis in einem Speicher unter einer ganz bestimmten Adresse ein Parameterwert des empfangenen Parameters abgelegt ist. Auch bei dieser Weiterbehandlung des Datensatzes eines empfangenen Parameters können Fehler auftreten, die zu den gleichen Fehlern führen können, wie eingangs erwähnt.

Bei einem vorteilhaften Verfahren wird jeder Datensatz eines empfangenen Parameters in seine einzelne Daten, beispielsweise Parameternummer, Parameterwert,..., zerlegt und separat abgespeichert. In Abhängigkeit dieser abgespeicherten Parameternummer wird eine zugehörige Speicheradresse für den Parameterwert ermittelt und dieser Parameterwert unter dieser Speicheradresse in einem Speicher abgelegt. Bei dem zu quittierenden Datensatz eines empfangenen Parameters wird dieser aus seiner abgespeicherten Parameternummer und einem abgespeicherten Parameterwert wieder zusammengesetzt, wobei die zugehörige Speicheradresse wieder aus der abgespeicherten Parameternummer ermittelt wird. Wird bei der Identitätsprüfung die Identität bestätigt, so ist der Übertragungsweg von der Dateneingabevorrichtung bis zur Einlesung in einem Speicher der zu parametrierenden Einrichtung fehlerfrei. D.h., die in der Dateneingabevorrichtung eingegebenen Datensätze zu übertragender Parameter sind auch so in einem Speicher der zu parametrierenden Einrichtung eingelesen worden.

Bei einem weiteren vorteilhaften Verfahren wird ein Bitmuster eines jeden Datensatzes empfangener Parameter für die Empfangsquittierung invertiert, die für die Identitätsprüfung durch eine nochmalige Invertierung wieder rückgängig gemacht wird. Somit können systematische Fehler auf der Übertragungsstrecke erkannt werden.

Zur weiteren Erläuterung der Erfindung wird auf die Zeichnung Bezug genommen, in der eine Ausführungsform des erfindungsgemäßen Verfahrens schematisch veranschaulicht ist.
- FIG 1: zeigt eine bekannte Anordnung zum Parametrieren von einer Einrichtung, wobei in der
- FIG 2: ein vorteilhaftes erfindungsgemäßes Verfahren schematisch veranschaulicht ist.

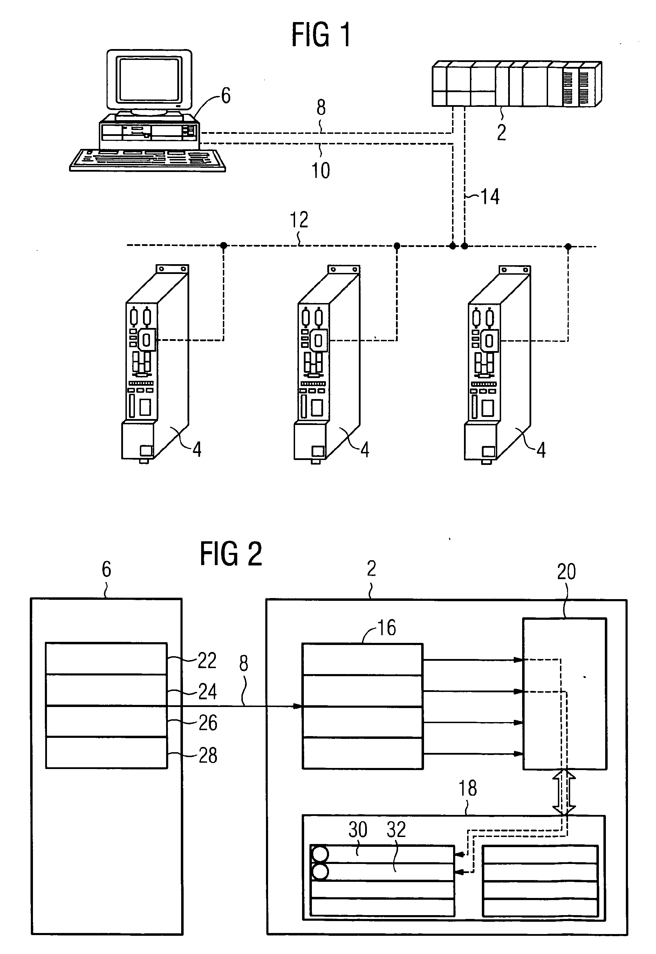

In der FIG 1 ist eine bekannte Anordnung zum Parametrieren einer Einrichtung 2 bzw. mehrerer Einrichtung 4 schematisch veranschaulicht. Zum Parametrieren ist eine Dateneingabevorrichtung 6 vorgesehen. Diese Dateneingabevorrichtung 6, die ein PC bzw. PG sein kann, ist mittels einer ersten Datenverbindung 8 mit der Einrichtung 2 bzw. mittels einer zweiten Datenverbindung 10 mit der Einrichtung 4 datentechnisch verbunden. Als Einrichtung 2 ist in dieser Darstellung ein Automatisierungssystem und als Einrichtung 4 ist jeweils ein Wechselrichter eines dezentralen Antriebssystems vorgesehen. Diese Wechselrichter 4 sind mittels eines Feldbusses 12 datentechnisch miteinander verknüpft. Außerdem ist das Automatisierungssystem 2 mittels einer Busleitung 14 mit diesem Feldbus 12 verbunden. Die erste Datenverbindung 8, die die Dateneingabevorrichtung 6 mit dem Automatisierungssystem 2 verbindet, ist eine serielle Zweipunktverbindung. Dagegen besteht die zweite Datenverbindung 10, die die Dateneingabevorrichtung 6 mit den Wechselrichtern 4 verbindet, aus parallelen Verbindungen bzw. einer Busverbindung. Die beiden Datenverbindungen 8 und 10 können gleichzeitig mit der Dateneingabevorrichtung 6 verknüpft sein, da für die erste Datenverbindung 8 eine serielle Schnittstelle und für die zweite Datenverbindung 10 eine parallele Schnittstelle benötigt wird.

Bei der Parametrierung werden von einem Bediener die Datensätze mehrerer Parameter nacheinander eingegeben und zur Einrichtung 2 oder zu den Einrichtungen 4 seriell oder parallel übermittelt. Bei diesen Einrichtungen 2 und 4 werden Datensätze eingehender Parameter zunächst in einem Empfangspuffer 16 abgelegt, bevor diese in einem dafür vorgesehenen Datenspeicher 18 abgelegt werden. Ein derartiger Datenspeicher 18 wird auch als Parameterspeicher bezeichnet. Für das Einlesen eines Datensatzes, der zumindest eine Parameternummer und einen Parameterwert enthält, wird eine Vorrichtung 20 benötigt, die auch als Parametermanager bezeichnet wird. Dieser Parametermanager 20 ist beispielsweise ein Mikroprozessor bzw. ein Signalprozessor der neben dem Einlesen von Daten eines Parameters auch noch für die Steuer- und Regelung der Einrichtung 2 bzw. 4 verantwortlich sein kann.

Neben den genannten Daten, wie Parameternummer und Parameterwert, kann der Datensatz auch noch einen Parameterindex aufweisen. Einen derartigen Parameterindex wird verwendet, wenn ein Parameter für unterschiedliche Anwendungen unterschiedliche Parameterwerte aufweist. Weist ein Parameter keine unterschiedlichen Parameterwerte auf, so wird dieser Parameterindex ignoriert. Diese Daten eines Datensatzes eines Parameters sind in der FIG 2 in der Dateneingabevorrichtung 6 jeweils in einem Datenfeld 22, 24, 26 und 28 eingegeben. Im Datenfeld 22 wird die Parameternummer und im Datenfeld 24 der Parameterindex hinterlegt. Der Parameterwert, der beispielsweise ein 32-Bit-Wort ist, wird zweigeteilt, wobei dann jeweils 16-Bit in das Datenfeld 26 und 28 abgelegt werden. Bei der Übermittlung werden diese Datenfelder 26 bis 28 seriell bzw. parallel ausgelesen. Auf der Empfangsseite, d.h. auf der Eingangsseite der Einrichtung 2 bzw. 4, weist der Empfangspuffer 16 ebenfalls mehrere Datenfelder auf, in denen die Daten seriell bzw. parallel eingelesen werden. Mit Hilfe der Parameternummer bzw. mit Hilfe der Parameternummer und dem Parameterindex bestimmt der Parametermanager 20 eine Speicheradresse, unter der der Parameterwert im Parameterspeicher 18 abgelegt werden soll.

Bei der bekannten Parametrierung weiß der Bediener der Dateneingabevorrichtung nicht, ob die von ihm eingegebenen Daten auch so bei der Einrichtung 2 bzw. 4 angekommen sind. Auch im Innern der Dateneingabevorrichtung 6 kann es vorkommen, dass ein eingegebener Wert nicht genau so für eine Datenübertragung in entsprechende Datenfelder abgelegt ist. Somit kann man bei bekannten Verfahren zur Parametrierung nie ganz sicher sein, ob im Parameterspeicher 18 der Einrichtung 2 bzw. 4 die vorgesehenen Parameterwerte auch tatsächlich eingelesen sind. Eventuell auftretende Fehler können dann anhand des Betriebes der Einrichtung 2 bzw. 4 erkannt werden.

Bei der Integration von sicherheitsrelevanten Funktionen in der Einrichtung 2 bzw. 4, wobei in der Regel eine Anzahl von Parametern notwendig sind, um die entsprechenden Funktionen bedarfsgerecht einzustellen, kann ein Fehler unter Umständen nicht nur zu einem materiellen Schaden führen.

Mit Hilfe des erfindungsgemäßen Verfahrens werden Fehler bei der Parametrierung unterbunden. Dies wird dadurch erreicht, dass beim Parametrierverfahren weitere Verfahrensschritte eingebunden sind. Ein weiterer Verfahrensschritt ist die Empfangsquittierung jedes einzelnen Datensatzes empfangener Parameter in der Einrichtung 2 bzw. 4. D.h., die in den Datenfelder des Empfangspuffers 16 abgelegten Daten werden zur Bestätigung des Empfangs wieder über die Datenverbindung 8 bzw. 10 an die Dateneingabevorrichtung 6 zurückgesendet. In einem weiteren zusätzlichen Verfahrensschritt wird eine Identitätsprüfung vorgenommen. Bei dieser Identitätsprüfung werden die Daten in den einzelnen Datenfeldern vom gesendeten Datensatz und vom empfangsquittierten Datensatz miteinander verglichen. Wenn diese Daten übereinstimmen, ist die Identitätsprüfung positiv ausgefallen. Dies wird der Einrichtung 2 bzw. 4 mitgeteilt, wodurch der empfangene und im Empfangsspeicher 16 abgelegte Datensatz freigegeben wird. Damit kann erkannt werden, ob bei der Übertragung Fehler aufgetreten sind. Fehler, die beim Einlesen von Parameterwerten in einen Parameterspeicher 18 auftreten können, werden mit diesem zusätzlichen Verfahren nicht erkannt.

Um auch diese Fehler zu erkennen, sind weitere Verfahrensschritte vorgesehen, die eine vorteilhafte Ausführungsform des erfindungsgemäßen Verfahrens zur Parametrierung aufweist.

Diese vorteilhafte Ausführungsform des erfindungsgemäßen Verfahrens ist dadurch gekennzeichnet, dass nicht schon der empfangene Datensatz quittiert wird, sondern der eingelesene Parameterwert. Dazu wird mit Hilfe der Parameternummer bzw. mit Hilfe der Parameternummer und des Parameterindex, die an vorbestimmten Plätzen 30 und 32 im Parameterspeicher 18 hinterlegt sind, die Speicheradresse bestimmt und der darin hinterlegte Parameterwert ausgelesen. Die Parameternummer, der ausgelesene Parameterwert und der Parameterindex bilden dann wieder einen Datensatz, der empfangsquittiert wird. Bei der Identitätsprüfung wird dieser empfangsquittierte zusammengesetzte Datensatz mit dem eingegebenen Datensatz verglichen. Wenn die Identität stimmt, wird der eingelesene Parameterwert freigegeben. Mit diesem vorteilhaften Verfahren wird die Parametrierung von der Dateneingabevorrichtung bis zu einem eingelesenen Parameterwert überprüft.

Um auch noch systematische Fehler auf der Übertragungsstrecke zu erkennen, wird ein Bitmuster eines jeden Datensatzes eines empfangenen Parameters für die Empfangsquittierung invertiert. Dieses quittierte invertierte Bitmuster wird für die Identitätsprüfung nochmals invertiert, wodurch die Invertierung aufgehoben wird. Ohne diese Invertierung würden systematische Fehler unerkannt bleiben.

Mit Hilfe des erfindungsgemäßen Verfahrens zur Parametrierung einer Einrichtung 2 bzw. 4 kann sichergestellt werden, dass eingegebene Datensätze zu übertragender Parameter, insbesondere sicherheitsrelevanter Parameter, unverändert, insbesondere auch an den vorgesehenen Speicherplätzen in der Einrichtung 2 bzw. 4, eingelesen werden.

## Patentansprüche

1. Verfahren zur Parametrierung einer Einrichtung (2,4) mittels einer Dateneingabevorrichtung (6), die mittels einer Datenverbindung (8,10) mit der Einrichtung (2,4) verknüpft ist, mit folgenden Verfahrensschritten:
a) Übermittlung eines eingegebenen wenigstens eine Parameternummer und einen Parameterwert aufweisenden Datensatzes wenigstens eines Parameters,
b) Empfangsquittierung dieses gesendeten Datensatzes,
c) Identitätsprüfung dieses quittierten Datensatzes anhand des eingegebenen Datensatzes und
d) Freigabe des empfangenen Datensatzes nach erfolgter Identitätsbestätigung.

2. Verfahren nach Anspruch 1,
**dadurch gekennzeichnet, dass** jeder empfangene Datensatz wenigstens in Parameternummer und Parameterwert zerlegt und separat abgespeichert wird, wobei mittels der Parameternummer eine Speicheradresse für den abzuspeichernden Parameterwert ermittelt wird, und dass der zu quittierende Datensatz eines empfangenen Parameters aus seiner abgespeicherten Parameternummer und einem unter der ermittelten Speicheradresse abgespeicherten Parameterwert zusammengesetzt wird.

3. Verfahren nach einem der vorgenannten Ansprüche,
**dadurch gekennzeichnet, dass** ein Bitmuster eines empfangenen Datensatzes für die Empfangsquittung invertiert wird, der für die Identitätsprüfung wieder invertiert wird.

4. Verfahren nach einem der vorgenannten Ansprüche,
**dadurch gekennzeichnet, dass** die Identitätsprüfung visuell vorgenommen wird.

5. Verfahren nach einem der Ansprüche 1 bis 3,
**dadurch gekennzeichnet, dass** die Identitätsprüfung maschinell vorgenommen wird.
